# EUROPÄISCHE PATENTSCHRIFT

(11) **EP 1 369 646 B1**
(45) Veröffentlichungstag und Bekanntmachung des Hinweises auf die Patenterteilung: **12.12.2007**
(21) Anmeldenummer: 03012640.3
(22) Anmeldetag: 04.06.2003
(51) Int. Cl.: F24D 3/14

(54) **Noppenplatte für die Halterung von Leitungen und Verfahren zu deren Herstellung**
Knob plate for fixing of pipes and process for its manufacturing
Plaque à plots pour la fixation des conduites et procédé de fabrication

(30) Priorität: 05.06.2002 DE 10224811
(43) Veröffentlichungstag der Anmeldung: 10.12.2003
(73) Patentinhaber: Wischemann, Ingo, 48407 Ochtrup (DE)
(72) Erfinder: Wischemann, Ingo, 48407 Ochtrup (DE)
(74) Vertreter: Linnemann, Winfried

(56) Entgegenhaltungen:
- EP-A- 0 947 778
- EP-A- 1 104 875
- DE-C- 19 815 023
- DE-U- 8 633 484
- DE-U- 9 106 703

## Beschreibung

Die vorliegende Erfindung betrifft eine Noppenplatte für die Halterung von Leitungen, insbesondere von Heizleitungen einer Fußboden-, Wand- oder Deckenheizung oder von Kühlleitungen einer Kühleinrichtung, wobei die Noppenplatte aus einer einen oberen Plattenteil bildenden Tiefziehfolie aus Kunststoff, an der nach oben vorstehende Noppen als Halter für die Leitungen ausgeformt sind, und aus einer einen unteren Plattenteil bildenden Isolierstofflage besteht, wobei die Noppen in ihrem Inneren mit jeweils einem eigenen Isolierstoffkörper gefüllt sind und die Isolierstofflage durch wenigstens eine vorgefertigte Isolierstoffplatte gebildet ist, die mit der Tiefziehfolie zu der Noppenplatte verbunden ist, und wobei die Isolierstoffkörper in den Noppen durch Schaumkunststoff gebildet sind, der in flüssigem Zustand in die Noppen eingebracht und darin ausgehärtet ist.

Außerdem betrifft die Erfindung ein Verfahren zur Herstellung einer Noppenplatte, wobei aus einer einen oberen Plattenteil bildenden Tiefziehfolie aus Kunststoff nach oben vorstehende Noppen als Halter für Leitungen ausgeformt werden, wobei die Tiefziehfolie dann mit einer einen unteren Plattenteil bildenden Isolierstofflage verbunden wird, wobei die Noppen in ihrem Inneren mit jeweils einem eigenen Isolierstoffkörper gefüllt werden, wobei als Isolierstofflage wenigstens eine vorgefertigte Isolierstoffplatte mit der Tiefziehfolie zu der Noppenplatte verbunden wird und wobei die Isolierstoffkörper in den Noppen durch Schaumkunststoff gebildet werden, der in flüssigem Zustand in die Noppen eingebracht und darin ausgehärtet wird.

Noppenplatten und zugehörige Herstellungsverfahren der eingangs genannten Art und für den genannten Verwendungszweck sind in unterschiedlichen Ausführungen bekannt.

Die EP-A-0 947 778 zeigt ein Dämmelement für Flächenheizungsrohre, insbesondere Fußbodenheizungsrohre, mit einer Dämmplatte aus einem Wärme- und/oder Trittschalldämmaterial und einer Folie, die eine Vielzahl von sickenartigen Haltevorsprüngen zum klemmenden Halten eines Rohres aufweist. Dabei ist vorgesehen, daß zwischen der Dämmplatte und der Folie eine an beide angrenzende Zwischenschicht angeordnet ist, die eine Mischung aus Kunststoffschaum-Partikeln und einem Bindemittel aufweist, und daß die Haltevorsprünge mit dem Material der Zwischenschicht ausgefüllt sind. Bei der Herstellung dieses Dämmelements wird zunächst eine Kunststoffolie auf ein Tiefziehwerkzeug mit Ausnehmungen aufgelegt. Im nächsten Arbeitsschritt wird durch Erzeugung von Unterdrücken in den Ausnehmungen die Folie zur Herstellung von Noppen verformt, die die Haltevorsprünge des Dämmelements bilden. Anschließend wird in die Hohlräume der Noppen sowie auf der gesamten Folie verteilt eine Mischung aus den Partikeln und dem Bindemittel eingebracht bzw. aufgetragen. Im letzten Arbeitsschritt wird die Dämmaterialplatte auf die Zwischenschicht aufgelegt und gegen diese gedrückt. Nach Aushärtung bzw. Erstarrung des Bindemittels ist das Dämmelement fertig hergestellt.

Als nachteilig wird bei diesem Dämmelement und dem Verfahren zu dessen Herstellung angesehen, daß das Einbringen und Auftragen der Mischung aus den Partikeln und dem Bindemittel relativ aufwendig ist und zur Erzielung einer vollständigen Füllung aller Noppen eine sorgfältige Arbeitsweise bzw. entsprechend aufwendige Vorrichtungen erfordert. Zur Sicherstellung einer hohen Produktqualität mit vollständig gefüllten Noppen ist somit ein relativ hoher Aufwand erforderlich. Wenn dieser hohe Aufwand nicht getrieben wird, kann es relativ leicht dazu kommen, daß ein Teil der Noppen nicht vollständig gefüllt wird, wodurch deren mechanische und thermische Eigenschaften beeinträchtigt werden.

Die DE 86 33 484 U beschreibt eine Montageplatte für eine Flächenheizung, bestehend aus einer Grundplatte aus Schaumstoff, zum Beispiel geschäumtem Polystyrol, die auf ihrer Oberfläche zylinderförmige Noppen aufweist, und aus einer dicht aufliegenden Formplatte aus Kunststoffolie, die auf ihrer Oberseite geschlossene Becher trägt, die nach unten offen sind, wobei Becher und Noppen aufeinandergestülpt und in einem identischen quadratischen Raster angeordnet sind. Bei dieser Montageplatte ist weiterhin zur Erzielung einer niedrigen Bauhöhe der Fußbodenheizungsanordnung unter Verwendung von Rohren kleineren Außendurchmessers zwischen 6 und 14 mm vorgesehen, daß die Becher direkt aus der Ebene der Formplatte herausragen und daß die Becher einen Außendurchmesser haben, der das ein- bis zweifache des zur Verwendung kommenden Rohraußendurchmessers aufweist. Bevorzugt ist die Formplatte mit der Grundplatte über Kleb- und/oder Schweißbereiche verbunden.

Bei dieser bekannten Montageplatte handelt es sich also um eine Noppenplatte, bei der die Isolierstofflage durch eine vorproduzierte Isolierstoffplatte mit einstückigen, vorragenden Noppen gebildet ist, die in die Hohlräume der Noppen der Tiefziehfolie passen. Bei dieser Noppenplatte wird zwar die Stabilität der Noppen in der Tiefziehfolie durch die darin angeordneten Noppen der Isolierstofflage verbessert, jedoch ist der Herstellungsaufwand für die Fertigung der Isolierstofflage erheblich größer als bei einer flachen Platte, da jeweils die Noppen in der vorgegebenen Anordnung mit angeformt werden müssen. Damit können keine Standard-Isolierstoffplatten mehr verwendet werden. Ein weiterer Nachteil wird darin gesehen, daß die Isolierstofflagen mit ihren Noppen sehr beschädigungsanfällig sind, solange die Tiefziehfolie nicht mit der Isolierstofflage verbunden ist. Auf diese Weise kommt es vor, daß schon ein Teil der Noppen der Isolierstofflage abgebrochen ist, bevor die Tiefziehfolie mit der Isolierstofflage verbunden ist.

Für die vorliegende Erfindung stellt sich deshalb die Aufgabe, eine Noppenplatte der eingangs genannten Art zu schaffen, die die aufgeführten Nachteile vermeidet und bei der insbesondere bei einer einfachen und kostengünstigen Herstellbarkeit eine gute Stabilität der Noppen, eine geringe Beschädigungsgefahr und eine gute Wärmeisolationswirkung erzielt werden. Weiterhin besteht die Aufgabe in der Schaffung eines Verfahrens zur Herstellung einer derartigen Noppenplatte.

Die Lösung des die Noppenplatte betreffenden Teils dieser Aufgabe gelingt erfindungsgemäß mit einer Noppenplatte der eingangs genannten Art, die dadurch gekennzeichnet ist, daß der in flüssigem Zustand in die Noppen eingebrachte Schaumkunststoff durch eine auf die Tiefziehfolie aufgelegte erste Isolierstoffplatte, die an ihrer von den Noppen abgewandten Seite mit Nuten und mit zu den Noppen deckungsgleichen, von den Nuten ausgehenden Durchbrechungen versehen ist, hindurch in die Noppen eingebracht ist und daß mit der ersten Isolierstoffplatte eine zweite, ebenflächige Isolierstoffplatte zur Bildung der Isolierstofflage verbunden ist.

Die erfindungsgemäße Noppenplatte bietet den Vorteil, daß die Isolierstofflage zum größten Teil durch eine herkömmliche Isolierstoffplatte gebildet werden kann, die an ihren Oberflächen eben ist und somit ein übliches und kostengünstiges Standard-Produkt sein kann. Gleichzeitig werden aber durch die individuelle Füllung der Noppen mit Isolierstoff diese besonders stabil und mit in die Wärmeisolation einbezogen. Hierdurch wird eine Noppenplatte mit sehr guten mechanischen und thermischen Eigenschaften geschaffen, die gleichzeitig kostengünstig herstellbar ist. Da die Isolierstoffkörper in den Noppen durch Schaumkunststoff gebildet sind, der in flüssigem Zustand in die Noppen eingebracht und darin ausgehärtet ist, werden die Noppen in der Tiefziehfolie mit hoher Zuverlässigkeit vollständig gefüllt, wobei eine besonders gute Stabilität und Isolationswirkung im Bereich der Noppen erzielt wird. Die erste Isolierstoffplatte mit den Nuten und Durchbrechungen dient bei der Herstellung der Noppenplatte als Hilfswerkzeug für die Verteilung des dann noch flüssigen Schaumkunststoffs, wodurch die Herstellung der Noppenplatte vereinfacht wird. Nach Fertigstellung der Noppenplatte bildet die erste Isolierstoffplatte zusammen mit der zweiten, ebenflächigen Isolierstoffplatte insgesamt die Isolierstofflage.

Der eingesetzte Schaumkunststoff ist bevorzugt ein Polyurethanschaum (PU-Schaum). Dieses Material hat sowohl günstige Verarbeitungseigenschaften als auch nach seiner Aushärtung günstige mechanische und thermische Eigenschaften.

Weiter ist für die erfindungsgemäße Noppenplatte vorgesehen, daß die Verbindung zwischen Tiefziehfolie und Isolierstoffplatte(n) durch Verklebung gebildet ist. Eine solche Verklebung läßt sich schnell und einfach herstellen und stellt eine schnelle Produktion der Noppenplatte sicher.

In einer bevorzugten Weiterbildung ist vorgesehen, daß die Verklebung durch einen gezielt eingebrachten Überschuß des Schaumkunststoffs gebildet ist. Auf diese Weise kann die Auftragung eines separaten Klebstoffs eingespart werden, wodurch die Produktion der Noppenplatte beschleunigt wird.

Alternativ kann die Verklebung durch einen gesondert aufgebrachten Klebstoff gebildet sein. Diese Ausführung der Noppenplatte ist insbesondere dann sinnvoll, wenn zwischen der Füllung der Noppen mit dem Schaumkunststoff und der Verbindung der Tiefziehfolie mit der Isolierstoffplatte ein zeitlicher Abstand besteht, der größer ist als die Reaktions- und Aushärtezeit des flüssigen Schaumkunststoffs.

Weiterhin ist für die Noppenplatte vorgesehen, daß das Material der Isolierstoffplatte(n) ein Schaumkunststoff, insbesondere Polystyrol (EPS), oder Mineralfaser, insbesondere Steinwolle, oder ein nachwachsendes Naturmaterial, insbesondere Kork oder Flachs, ist. Vorteilhaft besteht hinsichtlich des Materials für die Isolierstoff-platten eine große Auswahl, da die Isolierstofflage als ebenflächige Platte innerhalb der Noppenplatte eingesetzt werden kann. Deshalb können auch Isoliermaterialien verwendet werden, die sich nicht oder nur schwer in eine strukturierte, z.B. auf einer Flachseite der Platte mit Noppen versehene Form bringen lassen.

Hinsichtlich des Materials der Noppenplatte ist weiter vorgesehen, daß die Tiefziehfolie aus einem thermisch verformbaren Kunststoff, insbesondere Polyvinylchlorid (PVC), Polystyrol (PS), Polypropylen (PP), Polyethylen (PE), Acrylnitril-Butadien-Styrol (ABS) oder Polyethylenterephthalat (PET), besteht. Auch für die Tiefziehfolie der Noppenplatte besteht eine relativ große Materialauswahl, so daß für den jeweiligen Anwendungszweck das am besten geeignete Material jeweils ausgewählt werden kann.

Weiterhin betrifft die Erfindung ein Verfahren zur Herstellung einer Noppenplatte. Das Verfahren der eingangs genannten Art, das den zweiten Teil der oben gestellten Aufgabe löst, ist erfindungsgemäß dadurch gekennzeichet, daß der Schaumkunststoff durch eine auf die Tiefziehfolie aufgelegte erste Isolierstoffplatte hindurch in die Noppen eingebracht wird, wobei die erste Isolierstoffplatte an ihrer von den Noppen abgewandten Seite mit Nuten und mit zu den Noppen deckungsgleichen, von den Nuten ausgehenden Durchbrechungen oder alternativ anstelle der Nuten mit durchgehenden Schlitzen versehen ist.

Mit diesem Verfahren läßt sich die zuvor beschriebene Noppenplatte herstellen und es lassen sich die oben schon erwähnten guten mechanischen und thermischen Eigenschaften der Noppenplatte realisieren.

Vorteilhafte Ausgestaltungen und Weiterbildungen des erfindungsgemäßen Verfahrens sind in den Ansprüchen 11 bis 14 angegeben.

Ausführungsbeispiele der erfindungsgemäßen Noppenplatte werden im folgenden anhand einer Zeichnung erläutert. Die Figuren der Zeichnung zeigen:
- Figur 1: einen Ausschnitt aus einer Tiefziehfolie mit eingeformten Noppen im Querschnitt,
- Figur 2a: die Tiefziehfolie aus Figur 1 mit einer aufgelegten ersten Isolierstoffplatte während des Einbringens von flüssigem Schaumkunststoff, ebenfalls im Querschnitt,
- Figur 2b: die Isolierstoffplatte aus Figur 2a in einer perspektivischen Ansicht und
- Figur 3: die Tiefziehfolie mit der ersten Isolierstoffplatte und einer darauf aufgelegten zweiten Isolierstoffplatte während der Aushärtung des flüssigen Schaumkunststoffs zur Bildung der Noppenplatte, wieder im Querschnitt.

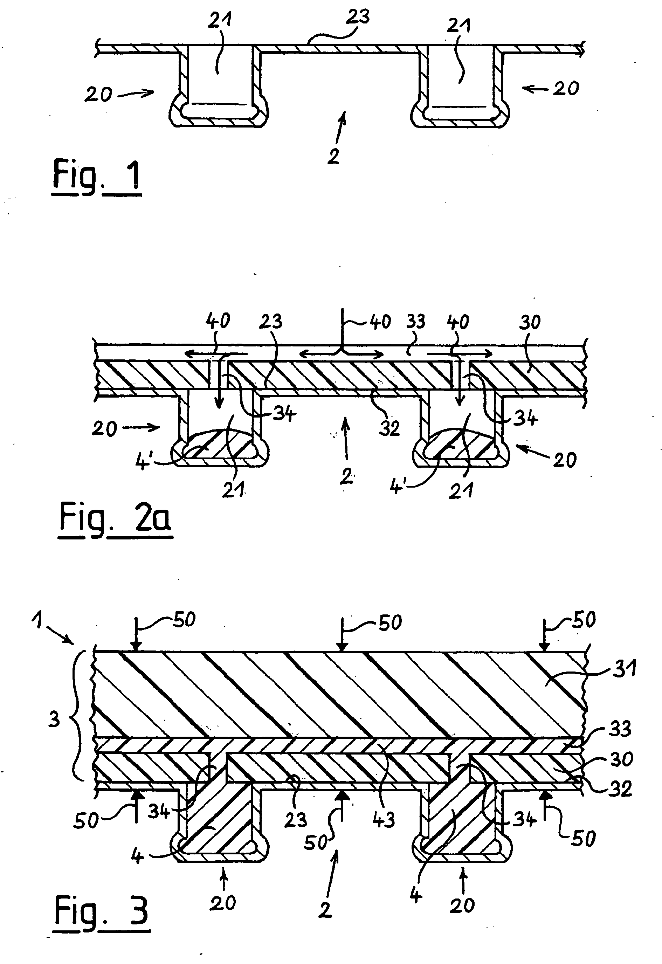

Figur 1 der Zeichnung zeigt im Querschnitt einen Ausschnitt aus einer Tiefziehfolie 2, die aus einem thermoplastisch verformbaren Kunststoff besteht. In die Tiefziehfolie 2 sind in einer vorgegebenen, an sich von einschlägigen Noppenplatten bekannten Anordnung Noppen 20 eingeformt, die bei der in der Zeichnung dargestellten Ausrichtung der Tiefziehfolie 2 aus dieser nach unten hin vorstehen. Die Rückseite 23 der Tiefziehfolie 2 weist in dieser Ausrichtung der Tiefziehfolie 2 nach oben. Das Innere 21 der Noppen 20 ist hier noch hohl.

In Figur 2a ist auf die Tiefziehfolie 2, genauer auf deren nach oben weisende Rückseite 23, eine erste Isolierstoffplatte 30 aufgelegt, die aus einem festen Schaumkunststoff besteht. Diese erste Isolierstoffplatte 30 besitzt eine ebene Unterseite 23, mit der sie auf der Rückseite 32 der Tiefziehfolie 2 aufliegt. Diese erste Isolierstoffplatte 30 ist an ihrer nach oben weisenden, also von der Tiefziehfolie 2 abgewandten Seite mit Nuten 33 und Durchbrechungen 34 versehen. Die Durchbrechungen 34 sind jeweils deckungsgleich zu den Noppen 20 in der Tiefziehfolie 2 angebracht. Die Nuten 33 verbinden jeweils mehrere Durchbrechungen 34 miteinander.

Die Nuten 33 und Durchbrechungen 34 dienen zur Einbringung und Verteilung eines flüssigen Schaumkunststoffs 4', der gemäß den Strömungspfeilen 40 an irgendeiner Stelle oder an mehreren Stellen in die Nuten 33 eingegossen wird. Aufgrund seines noch flüssigen Zustandes verteilt sich der Schaumkunststoff 4' durch die Nuten 33 und gelangt durch die Durchbrechungen 34 in das hohle Innere 21 der Noppen 20. Außerdem verbleibt ein Teil des flüssigen Schaumkunststoffs 4' in den Nuten 33.

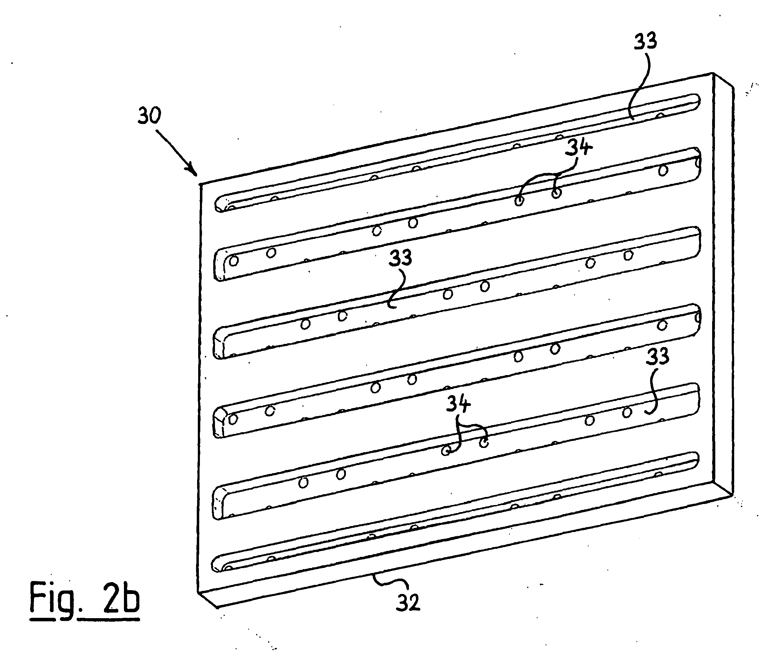

Figur 2b der Zeichnung veranschaulicht in ihrer perspektivischen Darstellung ein Beispiel für die erste Isolierstoffplatte 30. Bei dieser verlaufen mehrere, hier insgesamt sechs Nuten 33 parallel zueinander in Längsrichtung der Isolierstoffplatte 30. In jeder Nut 33 sind mehrere Durchbrechungen 34 vorgesehen; jede Durchbrechung 34 korrespondiert mit einer Noppe 20 in der in Figur 2b nicht dargestellten, an der dem Betrachter abgewandten Flachseite 32 anzuordnenden zugehörigen Tiefziehfolie 2. Alternativ können die Nuten 33 auch gitterförmig oder in einer anderen geeigneten Ausrichtung verlaufen.

Die erste Isolierstoffplatte 30 kann ein Formteil sein, das bei seinem Aufschäumen sofort mit den Nuten 33 und Durchbrechungen 34 versehen wird. Alternativ kann die erste Isolierstoffplatte 30 auch in ihrer Ausgangsform eine gängige, beidseitig ebenflächige Isolierstoffplatte sein, in die nachträglich die Nuten 33 und Durchbrechungen 34 eingebracht sind, vorzugsweise durch ein thermisches Verfahren, wie Schmelzschneiden oder -prägen.

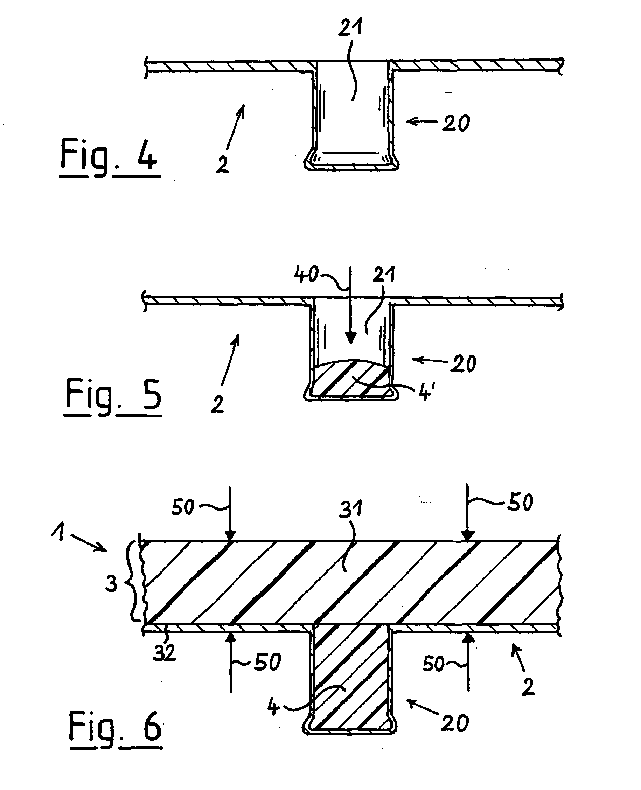

Figur 3 der Zeichnung zeigt die Tiefziehfolie 2 und die erste Isolierstoffplatte 30 nach dem Auflegen einer zweiten Isolierstoffplatte 31 auf die nach oben weisende freie Seite der ersten Isolierstoffplatte 30. Wie durch Pfeile 50 angedeutet ist, werden die Tiefziehfolie 2, die erste Isolierstoffplatte 30 und die zweite Isolierstoffplatte 31 mit einer vorgegebenen Kraft aufeinandergedrückt, bis der Schaumkunststoff aufgeschäumt und ausgehärtet ist und einen festen Isolierstoffkörper 4 bildet, der jeweils die Noppen 20 ausfüllt. Außerdem füllt der erhärtete Schaumkunststoff 4 auch die Durchbrechungen 34 und die Nuten 33 aus; gleichzeitig sorgt er nach seiner Aushärtung für die gewünschte Verbindung von Tiefziehfolie 2 sowie erster und zweiter Isolierstoffplatte 30, 31 miteinander, wobei hierfür die Klebewirkung des Schaumkunststoffs 4 genutzt wird.

Nach dem Erhärten des Schaumkunststoffs 4 kann das Zusammenpressen der Tiefziehfolie 2 und der beiden Isolierstoffplatten 30, 31 beendet werden, wonach dann eine fertige Noppenplatte 1 vorliegt. Bei dieser fertigen Noppenplatte 1 sind die Noppen 20 jeweils mit einem eigenen Isolierstoffkörper 4 gefüllt. Die Isolierstofflage 3 wird durch die beiden miteinander sowie mit der Tiefziehfolie 2 verbundenen Isolierstoffplatten 30, 31 gebildet. Die Verbindung der genannten Teile miteinander erfolgt durch den Schaumkunststoff, der einstückig die Noppen 20, die Durchbrechungen 34 und die Nuten 33 ausfüllt und im übrigen eine Klebewirkung gegenüber den anliegenden benachbarten Teilen der Noppenplatte 1 ausübt.

## Patentansprüche

1. Noppenplatte (1) für die Halterung von Leitungen, insbesondere von Heizleitungen einer Fußboden-, Wand- oder Deckenheizung oder von Kühlleitungen einer Kühleinrichtung, wobei die Noppenplatte (1) aus einer einen oberen Plattenteil bildenden Tiefziehfolie (2) aus Kunststoff, an der nach oben vorstehende Noppen (20) als Halter für die Leitungen ausgeformt sind, und aus einer einen unteren Plattenteil bildenden Isolierstofflage (3) besteht, wobei die Noppen (20) in ihrem Inneren (21) mit jeweils einem eigenen Isolierstoffkörper (4) gefüllt sind und die Isolierstofflage (3) durch wenigstens eine vorgefertigte Isolierstoffplatte (30, 31) gebildet ist, die mit der Tiefziehfolie (2) zu der Noppenplatte (1) verbunden ist, und wobei die Isolierstoffkörper (4) in den Noppen (20) durch Schaumkunststoff (4') gebildet sind, der in flüssigem Zustand in die Noppen (20) eingebracht und darin ausgehärtet ist,
**dadurch gekennzeichnet,**
**daß** der in flüssigem Zustand in die Noppen (20) eingebrachte Schaumkunststoff (4') durch eine auf die Tiefziehfolie (2) aufgelegte erste Isolierstoffplatte (30), die an ihrer von den Noppen (20) abgewandten Seite mit Nuten (33) und mit zu den Noppen (20) deckungsgleichen, von den Nuten (33) ausgehenden Durchbrechungen (34) versehen ist, hindurch in die Noppen (20) eingebracht ist und daß mit der ersten Isolierstoffplatte (30) eine zweite, ebenflächige Isolierstoffplatte (31) zur Bildung der Isolierstofflage (3) verbunden ist.

2. Noppenplatte nach Anspruch 1, **dadurch gekennzeichnet, daß** der Schaumkunststoff (4') ein Polyurethanschaum (PU-Schaum) ist.

3. Noppenplatte nach einem der vorhergehenden Ansprüche, **dadurch gekennzeichnet, daß** die Verbindung zwischen Tiefziehfolie (2) und Isolierstoffplatte(n) (30, 31) durch Verklebung gebildet ist.

4. Noppenplatte nach Anspruch 3, **dadurch gekennzeichnet, daß** die Verklebung durch einen gezielt eingebrachten Überschuß des Schaumkunststoffs (4') gebildet ist.

5. Noppenplatte nach Anspruch 3, **dadurch gekennzeichnet, daß** die Verklebung durch einen gesondert aufgebrachten Klebstoff gebildet ist.

6. Noppenplatte nach einem der vorhergehenden Ansprüche, **dadurch gekennzeichnet, daß** das Material der Isolierstoffplatten (30, 31) ein Schaumkunststoff oder Mineralfaser oder ein nachwachsendes Naturmaterial ist.

7. Noppenplatte nach Anspruch 6, **dadurch gekennzeichnet, daß** das Material der Isolierstoffplatten (30, 31) Polystyrol (EPS) oder Steinwolle oder Kork oder Flachs ist.

8. Noppenplatte nach einem der vorhergehenden Ansprüche, **dadurch gekennzeichnet, daß** die Tiefziehfolie (2) aus einem thermisch verformbaren Kunststoff besteht.

9. Noppenplatte nach Anspruch 8, **dadurch gekennzeichnet, daß** der thermisch verformbare Kunststoff Polyvinylchlorid (PVC), Polystyrol (PS), Polypropylen (PP), Polyethylen (PE), Acrylnitril-Butadien-Styrol (ABS) oder Polyethylenterephthalat (PET) ist.

10. Verfahren zur Herstellung einer Noppenplatte (1) nach einem der vorhergehenden Ansprüche, wobei aus einer einen oberen Plattenteil bildenden Tiefziehfolie (2) aus Kunststoff nach oben vorstehende Noppen (20) als Halter für Leitungen ausgeformt werden, wobei die Tief ziehfolie (2) dann mit einer einen unteren Plattenteil bildenden Isolierstofflage (3) verbunden wird, wobei die Noppen (20) in ihrem Inneren (21) mit jeweils einem eigenen Isolierstoffkörper (4) gefüllt werden, wobei als Isolierstofflage (3) wenigstens eine vorgefertigte Isolierstoffplatte (30, 31) mit der Tiefziehfolie (2) zu der Noppenplatte (1) verbunden wird und wobei die Isolierstoffkörper (4) in den Noppen (20) durch Schaumkunststoff (4') gebildet werden, der in flüssigem Zustand in die Noppen (20) eingebracht und darin ausgehärtet wird,
**dadurch gekennzeichnet,**
**daß** der Schaumkunststoff (4') durch eine auf die Tiefziehfolie (2) aufgelegte erste Isolierstoffplatte (30) hindurch in die Noppen (20) eingebracht wird, wobei die erste Isolierstoffplatte (30) an ihrer von den Noppen (20) abgewandten Seite mit Nuten (33) und mit zu den Noppen (20) deckungsgleichen, von den Nuten ausgehenden Durchbrechungen (34) oder alternativ anstelle der Nuten (33) mit durchgehenden Schlitzen versehen ist.

11. Verfahren nach Anspruch 10, **dadurch gekennzeichnet, daß** die Nuten (33) und die Durchbrechungen (34) oder die Schlitze in der ersten Isolierstoffplatte (30) mittels eines heißen Präge- und/oder Schneidwerkzeugs hergestellt werden.

12. Verfahren nach Anspruch 10 oder 11, **dadurch gekennzeichnet, daß** nach dem Einbringen des flüssigen Schaumkunststoffs (4') eine zweite, ebenflächige Isolierstoffplatte (31) mit der ersten Isolierstoffplatte (30) verbunden wird.

13. Verfahren nach Anspruch 11 der 12, **dadurch gekennzeichnet, daß** die Tiefziehfolie (2) und die Isolierstoffplatte(n) (30, 31) zu ihrer Verbindung miteinander verklebt werden.

14. Verfahren nach einem der Ansprüche 10 bis 13, **dadurch gekennzeichnet, daß**
a) die Tiefziehfolie (2) mit der offenen Seite des Inneren (21) ihrer Noppen (20) nach oben weisend angeordnet wird,
b) auf die Tiefziehfolie (2) die erste, mit den Nuten (33) und Durchbrechungen (34) oder mit den durchgehenden Schlitzen versehene Isolierstoffplatte (30), mit den ggf. vorhandenen Nuten (33) nach oben weisend, aufgelegt wird,
c) in die Nuten (33) oder Schlitze eine vorgegebene Menge des flüssigen, durch die Durchbrechungen (34) oder durch die Schlitze auch in die Noppen (20) fließenden Schaumkunststoffs (4') eingefüllt wird,
d) unmittelbar nach dem Einfüllen des Schaumkunststoffs (4') die zweite Isolierstoffplatte (31) auf die erste Isolierstoffplatte (30) aufgelegt wird und
e) dann die Tiefziehfolie (2) und die Isolierstoffplatten (30, 31) für eine der Reaktions- und Aushärtezeit des Schaumkunststoffs (4') entsprechende Zeitdauer aufeinander gepreßt werden, während der der Schaumkunststoff (4') aufschäumt, das Innere (21) der Noppen (20), der Durchbrechungen (34) und der Nuten (33) oder der Schlitze vollständig füllt und so die Tiefziehfolie (2) und die beiden Isolierstoffplatten (30, 31) miteinander verklebt.

## Claims

1. Knob plate (1) for fixing of pipes, in particular heating pipes of a floor, wall or ceiling heating system or of cooling pipes of a cooling device, wherein the knob plate (1) consists of a plastic deep-drawing film (2) forming an upper plate part, on which upwardly protruding knobs (20) are formed as holders for the pipes, and of an insulation layer (3) forming a bottom plate part, the knobs (20) being filled in their interior (21) with their own insulation body (4) each, and the insulation layer (3) being formed by at least one prefabricated insulation plate (30, 31) which is combined with the deep-drawing film (2) to the knob plate (1) and wherein the insulation bodies (4) in the knobs (20) are formed by foamed plastic (4') which is introduced in liquid condition into the knobs (20) and hardened therein, **characterized in that** the foamed plastic (4') introduced in liquid condition into the knobs (20) is introduced - through a first insulation plate (30) applied on the deep-drawing film (2) - into the knobs (20), said plate being provided with grooves (33) on the side facing away from the knobs (20) and with openings (34) congruent with the knobs (20) and emanating from the grooves (33), and that a second, planar insulation plate (31) is combined with the first insulation plate (30) to form the insulation layer (3).

2. Knob plate according to claim 1, **characterized in that** the foamed plastic (4') is a polyurethane foam (PU foam).

3. Knob plate according to any one of the preceding claims, **characterized in that** the connection between deep-drawing film (2) and insulation plate(s) (30, 31) is provided by adhesive bonding.

4. Knob plate according to claim 3, **characterized in that** the adhesive bonding is formed by a specifically introduced excess of the foamed plastic (4').

5. Knob plate according to claim 3, **characterized in that** the adhesive bonding is formed by a separately applied glue.

6. Knob plate according to any one of the preceding claims, **characterized in that** the material of the insulation plates (30, 31) is a foamed plastic or a mineral fiber or a renewable natural material.

7. Knob plate according to claim 6, **characterized in that** the material of the insulation plates (30, 31) is polystyrene (EPS) or rock wool or cork or flax.

8. Knob plate according to any one of the preceding claims, **characterized in that** the deep-drawing film (2) consists of a thermally ductile plastic.

9. Knob plate according to claim 8, **characterized in that** the thermally ductile plastic is polyvinylchloride (PVC), polystyrene (PS), polypropylene (PP), polyethylene (PE), acrylonitrile butadiene styrene (ABS) or polyethylene terephthalate (PET).

10. Process for the manufacture of a knob plate (1) according to any one of the preceding claims, wherein upwardly projecting knobs (20) are formed as holders for pipes from a deep-drawing film (2) forming an upper plate part, wherein the deep-drawing film (2) is then combined with one insulation layer (3) forming a bottom plate part, the knobs (20) being filled in their interior (21) with their own insulation body (4) each, wherein at least one prefabricated insulation plate (30, 31) is combined as insulation layer (3) with the deep-drawing film (2) to the knob plate (1) and wherein the insulation bodies (4) are formed in the knobs (20) by foamed plastic (4') which is introduced in liquid condition into the knobs (20) and hardened therein, **characterized in that** the foamed plastic (4') is introduced through a first insulation plate (30) applied on the deep-drawing film (2) into the knobs (20), the first insulation plate (30) being provided with grooves (33) on its side facing away from the knobs (20) and with openings (34) congruent with the knobs (20) and emanating from the grooves, or alternatively with continuous slots instead of the grooves (33).

11. Process according to claim 10, **characterized in that** the grooves (33) and the openings (34) or the slots are produced in the first insulation plate (30) by means of a hot embossing and/or cutting tool.

12. Process according to claim 10 or 11, **characterized in that**, after the introduction of the liquid foamed plastic (4'), a second, planar insulation plate (31) is combined with the first insulation plate (30).

13. Process according to claim 11 or 12, **characterized in that** the deep-drawing film (2) and the insulation plate(s) (30, 31) are glued together for their connection.

14. Process according to any one of the claims 10 to 13, **characterized in that**
a) the deep-drawing film (2) is arranged with the open side of the interior (21) of its knobs (20) pointing upwardly;
b) the first insulation plate (30) provided with the grooves (33) and openings (34) or with the continuous slots is applied onto the deep-drawing film (2), with the possibly existing grooves (33) pointing upwardly;
c) a specified volume of the liquid foamed plastic (4') is filled into the grooves (33) or slots and flows through the openings (34) or through the slots into the knobs (20) as well;
d) the second insulation plate (31) is applied onto the first insulation plate (30) immediately after filling in the foamed plastic (4'); and
e) the deep-drawing film (2) and the insulation plates (30, 31) are then pressed onto each other for a period corresponding to the reaction and hardening time of the foamed plastic (4') while the foamed plastic (4') foams up, completely fills the interior (21) of the knobs (20), the openings (34) and the grooves (33) or the slots, and thus bonds together the deep-drawing film (2) and the two insulation plates (30, 31).

## Revendications

1. Plaque à plots (1) pour la fixation de conduites, en particulier de conduites de chauffage d'un chauffage au sol, mural ou au plafond ou de conduites de refroidissement d'un dispositif de refroidissement, la plaque à plots (1) se composant d'une feuille emboutie (2) en matière plastique qui constitue une partie supérieure de la plaque et sur laquelle sont formés des plots (20) en saillie vers le haut en tant que fixations pour les conduites et d'une couche de matière isolante (3) qui constitue une partie inférieure de la plaque, les plots (20) étant remplis, dans leur intérieur (21), de respectivement un propre corps en matière isolante (4) et la couche de matière isolante (3) étant constituée par au moins une plaque de matière isolante préfabriquée (30, 31) qui est assemblée à la feuille emboutie (2) pour constituer la plaque à plots (1) et les corps en matière isolante (4), dans les plots (20), étant constitués par de la matière plastique cellulaire (4') qui est introduite à l'état liquide dans les plots (20) et y durcit, **caractérisée en ce que** la matière plastique cellulaire (4') introduite à l'état liquide dans les plots (20) est introduits dans les plots (20) à travers une première plaque de matière isolante (30) posée sur la feuille emboutie (2), laquelle plaque est pourvue de rainures (33) sur sa face opposée aux plots (20) et de perforations (34) qui coïncident avec les plots (20) et partent des rainures (33), et **en ce qu'**est assemblée à la première plaque de matière isolante (30) une deuxième plaque de matière isolante (31), plane, pour constituer la couche de matière isolante (3).

2. Plaque à plots selon la revendication 1, **caractérisée en ce que** la matière plastique cellulaire (4') est une mousse de polyuréthane (mousse PU).

3. Plaque à plots selon l'une des revendications précédentes, **caractérisée en ce que** l'assemblage entre la feuille emboutie (2) et la (les) plaque(s) de matière isolante (30, 31) est constituée par collage.

4. Plaque à plots selon la revendication 3, **caractérisée en ce que** le collage est constitué par un excédent de la matière plastique cellulaire (4') mis en place de manière ciblée.

5. Plaque à plots selon la revendication 3, **caractérisée en ce que** le collage est constitué par une matière collante appliquée séparément.

6. Plaque à plots selon l'une des revendications précédentes, **caractérisée en ce que** la matière des plaques de matière isolante (30, 31) est une matière plastique cellulaire ou une fibre minérale ou une matière naturelle renouvelable.

7. Plaque à plots selon la revendication 6, **caractérisée en ce que** la matière des plaques de matière isolante (30, 31) est du polystyrène (EPS) ou de la laine minérale ou du liège ou du lin.

8. Plaque à plots selon l'une des revendications précédentes, **caractérisée en ce que** la feuille emboutie (2) se compose d'une matière plastique thermodéformable.

9. Plaque à plots selon la revendication 8, **caractérisée en ce que** la matière plastique thermodéformable est du chlorure de polyvinyle (PVC), du polystyrène (PS), du polypropylène (PP), du polyéthylène (PE), de styrène butadiène acrylonitrile (ABS) ou du téréphthalate de polyéthylène (PET).

10. Procédé de fabrication d'une plaque à plots (1) selon l'une des revendications précédentes, des plots (20) en saillie vers le haut étant formés, en tant que fixations pour des conduites, à partir d'une feuille emboutie (2) en matière plastique constituant une partie supérieure de la plaque, la feuille emboutie (2) étant alors assemblée à une couche de matière isolante (3) qui constitue une partie inférieure de la plaque, les plots (20), dans leur intérieur (21), étant remplis de respectivement un propre corps en matière isolante (4), en tant que couche de matière isolante (3) au moins une plaque de matière isolante préfabriquée (30, 31) étant assemblée à la feuille emboutie (2) pour constituer la plaque à plots (1) et les corps en matière isolante (4), dans les plots (20), étant constitués par de la matière plastique cellulaire (4') qui est introduite à l'état liquide dans les plots (20) et y durcit, **caractérisé en ce que** la matière plastique cellulaire (4') est introduite dans les plots (20) à travers une première plaque de matière isolante (30) posée sur la feuille emboutie (2), la première plaque de matière isolante (30) étant pourvue de rainures (33) sur sa face opposée aux plots (20) et de perforations (34) qui coïncident avec les plots (20) et partent des rainures ou, alternativement, de fentes continues au lieu des rainures (33).

11. Procédé selon la revendication 10, **caractérisé en ce que** les rainures (33) et les perforations (34) ou les fentes sont réalisées dans la première plaque de matière isolante (30) au moyen d'un outil d'emboutissage et/ou de coupage à chaud.

12. Procédé selon la revendication 10 ou 11, **caractérisé en ce que**, après la mise en place de la matière plastique cellulaire liquide (4'), une deuxième plaque de matière isolante (31), plane, est assemblée à la première plaque de matière isolante (30).

13. Procédé selon la revendication 11 ou 12, **caractérisé en ce que** la feuille emboutie (2) et la (les) plaque(s) de matière isolante (30, 31) sont collées ensemble aux fins de leur assemblage.

14. Procédé selon l'une des revendications 10 à 13, **caractérisé en ce que**
a) la feuille emboutie (2) est disposée avec le côté ouvert de l'intérieur (21) de ses plots (20) tourné vers le haut,
b) la première plaque de matière isolante (30), pourvue des rainures (33) et des perforations (34) ou des fentes continues, est appliquée sur la feuille emboutie (2) avec les rainures (33) le cas échéant présentes tournées vers le haut,
c) une quantité prédéterminée de la matière plastique cellulaire liquide (4'), qui coule également dans les plots (20) en passant par les perforations (34) ou par les fentes, est introduite dans les rainures (33) ou les fentes,
d) directement après l'introduction de la matière plastique cellulaire (4'), la deuxième plaque de matière isolante (31) est appliquée sur la première plaque de matière isolante (30) et
e) ensuite, la feuille emboutie (2) et les plaques de matière isolante (30, 31) sont pressées les unes sur les autres pendant une durée de temps correspondant au temps de réaction et de durcissement de la matière plastique cellulaire (4'), pendant laquelle la matière plastique cellulaire (4') mousse, remplit entièrement l'intérieur (21) des plots (20), des perforations (34) et des rainures (33) ou des fentes et colle ainsi entre elles la feuille emboutie (2) et les deux plaques de matière isolante (30, 31).
